# EUROPEAN PATENT APPLICATION

(11) **EP 1 879 409 A1**
(43) Date of publication of application: **16.01.2008**
(21) Application number: 06014411.0
(22) Date of filing: 11.07.2006
(51) Int. Cl.: H04Q 7/36, H04L 12/56, H04L 12/28

(54) **Time frame structure of a multi hop radio communication system**

(71) Applicant: Nokia Siemens Networks GmbH & Co. KG, 81541 München (DE)
(72) Inventor: Klein, Anja, Prof. Dr., 64287 Darmstadt (DE); Müller, Christian, 56743 Mendig (DE); Unger, Timo, 64289 Darmstadt (DE); Wegner, Frank, 13407 Berlin (DE)

(57) **Abstract**

A method for operating a radio communication system is proposed wherein messages are transmitted from a sending radio station (AP, UT1) to a receiving radio station (AP, UT1) via a relay radio station (RS1). The transmission is carried out in time frames, the time frames comprising subframes. First subframes within the time frames are provided for direct transmissions from the sending radio station (AP, UT1) to the relay radio station (RS1). Second subframes within the time frames are provided for transmissions from the relay radio station (RS1) to the receiving radio station (AP, UT1). The duration of the first subframes and/or of the second subframes varies.

## Description

The present invention relates to a method for operating a radio communication system, wherein messages are transmitted from a sending radio station to a receiving radio station via a relay radio station.

In radio communication systems, messages containing information such as speech, video data, SMS (Short Message Service), MMS (Multimedia Messaging Service), remote control, etc. are transmitted over an air interface between radio stations. The transmission can be both bidirectional and unidirectional. Radio stations receiving and/or transmitting messages can be part of the network infrastructure, being e.g. base stations, repeater, access points; on the other hand, radio stations being user terminals exist. In a mobile radio communication system, at least some user terminals are mobile radio stations. For transmitting messages, carrier frequencies available to the respective radio communication system are used.

Current mobile radio communication systems are oftentimes cellular systems designed e.g. according to the standard GSM (Global System for Mobile Communication) or UMTS (Universal Mobile Telecommunications System), having network infrastructure components comprising amongst others base stations and devices for controlling the base stations. A further example of a radio communication system is a broadband system with wireless access, e.g. according to IEEE 802.16. Future systems may be evolutions of UMTS, referred to as LTE (Long Term Evolution), fourth generation systems, or ad-hoc networks. Besides the wide-ranging cellular systems, wireless local networks like WLANs, HiperLAN systems, DECT systems, IEEE 802.xy systems, Bluetooth systems, and WATM systems can be deployed.

Different multiple access techniques exist in order to allow user terminals to access the radio resources. Multiple access techniques allow for a partitioning of radio resources in the time domain (Time Division Multiple Access, TDMA), in the frequency domain (Frequency Division Multiple Access, FDMA), in the code domain (Code Division Multiple Access, CDMA), and in the space domain (Space Division Multiple Access, SDMA). Preferably combinations of different multiple access techniques are applied, such as the combination of a FDMA and a CDMA technique.

In order to make an especially efficient transmission of information possible, a frequency band can be subdivided into a multiplicity of subcarriers. This method permits to transmit several narrowband signals instead of one broadband signal, having the advantage of reducing the complexity on the receiver end. Furthermore, by using subcarriers radio resources can be assigned to user terminals with high granularity. The latter is especially beneficial for transmissions with varying data rates. OFDM (Orthogonal Frequency Division Multiplexing), an example of a multicarrier transmission method, uses approximately rectangular pulse shapes in the time domain. Looking at a certain subcarrier, as a result of the choice of the width of the OFDM-subcarriers, the signals of the other subcarriers have a zero crossing in the middle of the certain subcarrier, so that OFDM-subcarriers are orthogonal to each other.

Radio stations can directly communicate with each other if they are located in each others radio coverage area. In case a direct communication is not possible, messages between these radio stations can be relayed by other radio stations acting as repeaters or relay radio stations. The role of a relay radio station can - dependent on the design of the system - be taken over by a radio station of the network infrastructure or by a user terminal. In WLANs for example, messages can be relayed between an access point and a user terminal located far away from the access point. An other example is an ad-hoc mode of a radio communication system where user terminals are able to communicate directly with each other, the messages being relayed over one or more hops, without base stations or access points as intermediary.

The object of the present invention is to provide an advantageous method for operating a radio communication system which allows for the use of relay radio stations. It is a further object of the invention to provide a respective radio communication system.

This is achieved by a method for operating a radio communication system and by a radio communication system according to the independent claims. Further developments and advantageous embodiments of the invention are the subject-matter of dependent claims.

According to the method for operating a radio communication system messages are transmitted from a sending radio station to a receiving radio station via a relay radio station, the transmission being carried out in time frames, the time frames comprising subframes. First subframes within the time frames are provided for direct transmissions from the sending radio station to the relay radio station. Second subframes within the time frames are provided for transmissions from the relay radio station to the receiving radio station. The duration of the first subframes and/or of the second subframes varies.

In the multi-hop scenario of the invention, messages from the sending radio station to the receiving radio station are not directly transmitted, but over hops. The first hop corresponds to the direct transmission from the sending radio station to the relay radio station. In case only one relay radio station is used between the sending radio station and the receiving radio station, the transmission from the sending radio station to the receiving radio station is carried out over two hops, the second hop in this case corresponding to the direct transmission from the relay radio station to the receiving radio station.

The sending radio station can e.g. be a radio station of the radio communication systems infrastructure or a user device. The same applies for the sending radio station and the relay radio station.

The communication of the sending, relay and receiving radio station is organized using time frames each comprising a plurality of subframes. A time frame has a given structure, e.g. certain subframes always being contained in this sort of time frame or a given order of subframes within this sort of time frame. The subdivision of a time frame in subframes, each subframe being a block of time within the time frame, enables to dedicate parts of the time frame to certain purposes. A time frame according to the invention comprises at least a first subframe and a second subframe. In addition, time frames having fewer or different subframes in cases where there is nothing to be transmitted in the first and second subframe can exist. It is possible that the time frame contains other subframes besides the first and the second subframe. Preferably, the time frames are not only used for the communication of the sending, relay and receiving radio station, but by each radio station inside a radio cell in which the sending, relay and receiving radio station are located.

The first subframes are provided for the direct transmission of messages from the sending radio station to the relay radio station. Therefore, if a message intended for the receiving radio station is to be sent from the sending radio station to the relay radio station, it has to be transmitted within a first subframe of a time frame. It is possible and advantageous to use the first subframes for other transmissions, for instance for the transmission of messages intended for other receiving radio stations from the sending radio station to the relay radio station or for the transmission of messages from the sending radio station to other relay radio stations.

The second subframes are provided for the transmission of messages from the relay radio station to the receiving radio station. Therefore, if a message from the sending radio station is to be transmitted from the relay radio station, it has to be transmitted within a second subframe of a time frame. It is possible and advantageous to use the second subframes for other transmissions, for instance for the transmission of messages intended for other receiving radio stations from the relay radio station.

The duration of the first subframe and/or of the second subframe is not fixed, but rather varies. This means that there is at least one time frame having a first subframe of a certain length and an other time frame having a first subframe of a different length and/or that there is at least one time frame having a second subframe of a certain length and an other time frame having a second subframe of a different length.

According to a preferred embodiment the variation is due to a change of a radio resource demand and/or of radio channel conditions. Through this, it is possible to adapt the composition of the time frame to the current need. An increase of radio resource demand or deteriorating radio channel conditions should lead to an extension of the length of the respective subframe or subframes.

The following embodiments are especially advantageous for downlink transmissions. Therefore, for the following embodiments the sending radio station preferably is a radio station of the network infrastructure, and the receiving radio station preferably is a user terminal.

Advantageously, third subframes within the time frames are provided for direct transmissions from the sending radio station to a second relay radio station, fourth subframes within the time frames are provided for transmissions from the second relay station to a second receiving radio station, and the duration of the third subframes and/or of the fourth subframes varies. Accordingly, a time frame contains at least a first subframe, a second subframe, a third subframe and a fourth subframe. The transmission of messages from the sending radio station to the second receiving radio station can be carried out using two or more hops. The transmission from the sending radio station to the relay radio station is separated in time from the transmission from the sending radio station to the second relay radio station by assigning these transmissions to different subframes. There may be more than the two aforementioned subframes provided for transmissions of the sending radio station to different relay radio stations.

According to an embodiment of the invention the first subframes are provided for direct transmissions from the sending radio station to a first group of relay radio stations, the first group comprising the relay radio station, and the third subframes are provided for direct transmissions from the sending radio station to a second group of relay radio stations, the second group comprising the second relay radio station. A group of relay radio stations comprises at least one relay radio station. Preferably, the first and the third subframes are provided exclusively for transmissions from the sending radio station to relay radio stations of the respective group.

According to an embodiment of the invention fifth subframes within the time frames are provided for direct transmissions from the sending radio station to a third receiving radio station, and the duration of the fifth subframes varies. In this case, a time frame contains at least a first subframe, a second subframe, and a fifth subframe. It is possible that the fifth subframe may be used for direct transmissions from the sending radio station to other receiving radio stations besides the third receiving radio station. Preferably, the fifth subframes are provided exclusively for direct transmissions from the sending radio station to receiving radio stations.

Advantageously the order of subframes within the time frames is: first subframe, second subframe, fifth subframe, third subframe, fourth subframe. Further subframes can be part of the time frames, being located e.g. before the first subframe, in between the aforementioned five subframes, or after the fourth subframe.

According to an embodiment of the invention the messages are transmitted from the relay radio station to the receiving radio station via an other relay radio station, and sixth subframes within the second subframes are provided for direct transmissions from the relay radio station to the other relay radio station, seventh subframes are provided within the second subframes for transmissions from the other relay radio station to the receiving radio station, and the duration of the sixth subframes and/or of the seventh subframes varies. As a direct transmission between the sending radio station and the relay radio station and a direct transmission between the relay radio station and the other relay radio station takes place, and furthermore a transmission from the other relay radio station to the receiving radio station follows, the transmission between the sending radio station and the receiving radio station comprises at least three hops. The transmission between the other relay radio station and the receiving radio station can be effected directly or over two or more hops.

The following embodiments are especially advantageous for uplink transmissions. Therefore, for the following embodiments the sending radio station preferably is a user terminal, and the receiving radio station preferably is a radio station of the network infrastructure.

According to an embodiment of the invention third subframes within the time frames are provided for direct transmission from a second sending radio station to a second relay radio station, fourth subframes are provided within the time frames for transmission from the second relay radio station to the receiving radio station, and the duration of the third subframes and/or of the fourth subframes varies. Accordingly, a time frame contains at least a first subframe, a second subframe, a third subframe and a fourth subframe. The transmission of messages from the second sending radio station to the receiving radio station can be carried out using two or more hops. The transmission from the sending radio station to the relay radio station is separated in time from the transmission from the second sending radio station to the second relay radio station by assigning these transmissions to different subframes. There may be more than the aforementioned two subframes provided for direct transmissions of different sending radio stations to different relay radio stations.

Preferably, fifth subframes within the time frames are provided for direct transmissions from a third sending radio station to the receiving radio station, and the duration of the fifth subframes varies. In this case, a time frame contains at least a first subframe, a second subframe, and a fifth subframe. It is possible that the fifth subframe may also be used for direct transmissions from other sending radio station to the receiving radio station. Preferably, the fifth subframes are provided exclusively for direct transmissions from sending radio stations to the receiving radio station.

According to an embodiment of the invention the order of subframes within the time frames is: first subframe, second subframe, fifth subframe, third subframe, fourth subframe. Further subframes can be part of the time frames, being located e.g. before the first subframe, in between the above mentioned five subframes, or after the fourth subframe.

According to an embodiment of the invention the messages are transmitted from the relay radio station to the receiving radio station via an other relay radio station, sixth subframes within the second subframes are provided for direct transmissions from the relay radio station to the other relay radio station, seventh subframes within the second subframes are provided for transmissions from the other relay radio station to the receiving radio station, and the duration of the sixth subframes and/or of the seventh subframes varies. As a direct transmission between the sending radio station and the relay radio station and a direct transmission between the relay radio station and the other relay radio station takes place, and furthermore a transmission from the other relay radio station to the receiving radio station follows, the transmission between the sending radio station and the receiving radio station comprises at least three hops. The transmission between the other relay radio station and the receiving radio station can be effected directly or over two or more hops.

The following embodiments are advantageous for both uplink and downlink transmissions.

Advantageously the method is carried out in a first radio cell by radio stations of the first radio cell and in a second call by radio stations of the second radio cell, and the order of the subframes within the time frames of the first radio cell is adapted to the order of the subframes within the time frames of the second radio cell. This can be done in order to improve radio channel conditions in the first and/or the second radio cell, e.g. by reducing interference, lower delays, lower pathloss, ameliorate fading conditions. Preferably, the adaptation of the order is carried out such that intercell-interference is reduced. The adaptation can for instance be implemented by placing subframes of radio stations of different cells which are located near the cell borders and therefore are close to each other in such a way that transmissions to and/or from these radio stations do not take place simultaneously.

The duration of the time frames can be fixed. In this case the length of a time frame does not change even if the length of one or more subframes varies. Alternatively, the duration of the time frame can vary. This can be useful for changing load situations.

According to an embodiment of the invention within the subframes messages of different connections are separated using time and/or frequency and/or space and/or code. It is especially advantageous to apply OFDMA.

The radio communication system according to the invention comprises means for transmitting messages from a sending radio station to a receiving radio station via a relay radio station, the transmission being carried out in time frames, the time frames comprising subframes. Furthermore, the radio communication system has means for providing first subframes within the time frames for direct transmissions from the sending radio station to the relay radio station, means for providing second subframes within the time frames for transmissions from the relay radio station to the receiving radio station, and means for varying the duration of the first subframes and/or the second subframes.

The radio communication system according to the invention is suited in particular for performing method steps according to the invention. The radio communication system can comprise means necessary to perform any method steps according to embodiments of the method.

The present invention will become more apparent from the description given herein below and from the accompanying drawings which are given by way of illustration only, and thus are not limitative of the present invention, and wherein:
- Fig. 1: depicts a radio cell of a mobile radio communication system,
- Fig. 2: depicts time frame structures of a radio cell,
- Fig. 3: depicts a frame order of a TDD system,
- Fig. 4: depicts a frame order of a FDD system,
- Fig. 5: depicts an uplink time frame structure,
- Fig. 6: depicts a subframe structure using TDMA,
- Fig. 7: depicts a subframe structure using FDMA,
- Fig. 8: depicts two radio cells of a mobile radio communication system,
- Fig. 9: depicts time frame structures of two radio cells.

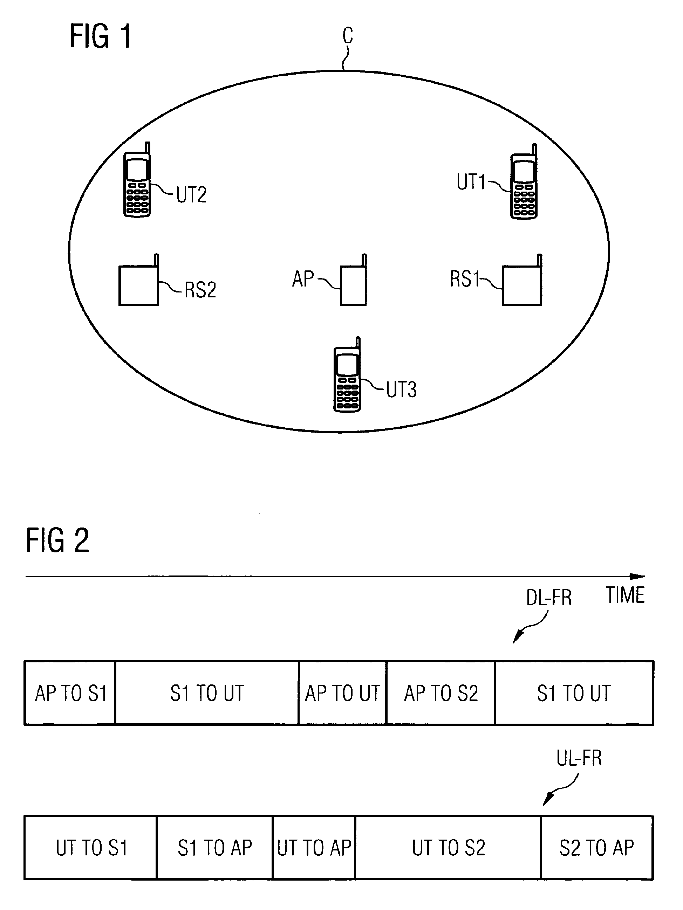

Figure 1 shows the radio cell C of a mobile radio communication system, the mobile radio communication system being a relay network. In the relay network, three classes of radio stations exist: access points, user terminals and relay stations. The radio cell C of figure 1 is the radio cell of the access point AP. The access point AP, a fixed, nomadic or mobile radio station, is connected to a wired of wireless backhaul service, the backhaul for simplification reasons not being depicted in figure 1. The access point AP can be e.g. a base station of a cellular system or an access point of a local system. Via the access point AP, radio stations within the radio cell C can communicate with each other, with radio stations of other radio cells, or with other communication systems such as the internet. Located inside the radio cell C is the user terminal UT1, the user terminal UT2, and the user terminal UT3. A user terminal is for instance a mobile radio terminal, particularly a mobile phone or a flexible fixed device, controlled by a human or a machine. A user terminal communicates with access points, relay stations or other user terminals using a wireless link.

Furthermore, located inside the radio cell C is the relay station RS1 and the relay station RS2. A relay station is a fixed or mobile device which receives a signal transmitted by a source, i.e. by an access point or a user terminal, or by another relay station and forwards the received information to an access point or a user terminal, or to another relay station. A relay station can be part of the infrastructure of the radio communication system, or a user terminal temporarily acting as relay station such as a terminal of a user who is willing to forward information of another user. The invention can advantageously be used in any kind of radio communications system applying relay stations to forward messages.

Using relay stations in a wireless network increases the radio coverage of an access point. Considering the exemplary constellation of figure 1, the access point AP is able to directly communicate with the user terminal UT3, but in contrast a direct communication between the access point AP and the user terminals UT2 and UT1 is not feasible due to the distance between the access point AP and the user terminals UT2 and UT1. However messages between the access point AP and the user terminal UT1 can be forwarded by the relay station RS1, while messages between the access point AP and the user terminal UT2 can be forwarded by the relay station RS2. A communication between the access point AP and the user terminal UT1 therefore is possible using the relay station RS1 for forwarding messages, and a communication between the access point AP and the user terminal UT2 is possible using the relay station RS2 for forwarding messages. Thus, the radio cell C of the access point AP consists not only of the area of direct radio coverage of the access point AP, but also of the area inside which user terminals can be reached by the access point AP via a relay station RS1 or RS2. A radio cell hence is an area containing one access point and one or more relay stations, whereby each relay station is directly connected to the access point or connected to the access point via one ore more relay stations. It is possible that the radio communication system comprises several radio cells besides the radio cell C of figure 1.

For simplification reasons, the invention will be described considering as example a two hop relay network. In a two hop relay network, a source can directly transmit a message to the sink, the sink being the radio station the message is intended for, or the source transmits the message to a relay station which forwards the message to the sink. The downlink transmission in the two hop relay network relates to the information flow from the access point AP to the user terminals UT1, UT2, UT3; the uplink transmission accordingly relates to the information flow from the user terminals UT1, UT2, UT3 to the access point AP.

Radio transmissions of different radio stations in the radio cell C should be separated to avoid collisions on the wireless medium, the separation applying coordinated resource assignment. Several medium access methods exist and can in principle be used: TDMA, FDMA, CDMA, SDMA, or combinations of these multiple access schemes. Also single carrier and multiple carrier transmissions schemes can be applied. As example of use, in the following it is assumed that radio transmissions are carried out using OFDMA; hence at least FDMA and TDMA are utilized as multiple access schemes. In radio communication systems not employing relay stations multiple access schemes only have to coordinate transmissions between the access point and different user terminals. In a two hop relay network however, a medium access scheme must be applied that in each cell coordinates firstly the transmission between the access point and the relay stations, secondly between the relay stations and user terminals, and thirdly between the access point and user terminals. An appropriate multiple access scheme should allow for an efficient allocation of radio resources in order to avoid interference inside a radio cell (intracell interference) and between different radio cells (intercell interference).

For the multiple access scheme of the two hop network, frame structures depicted in figure 2 are proposed. The upper part of figure 2 shows a downlink time frame DL-FR, while the bottom part shows an uplink time frame UL-FR. As an OFDMA system is considered, the frequency dimension corresponds to the vertical direction and the time dimension corresponds to the horizontal direction. A time frame is a period of time divided in blocks of time, called subframes, during which the radio resources are used for certain purposes. The downlink time frame DL-FR can be of the same or of different length compared to the uplink time frame UL-FR.

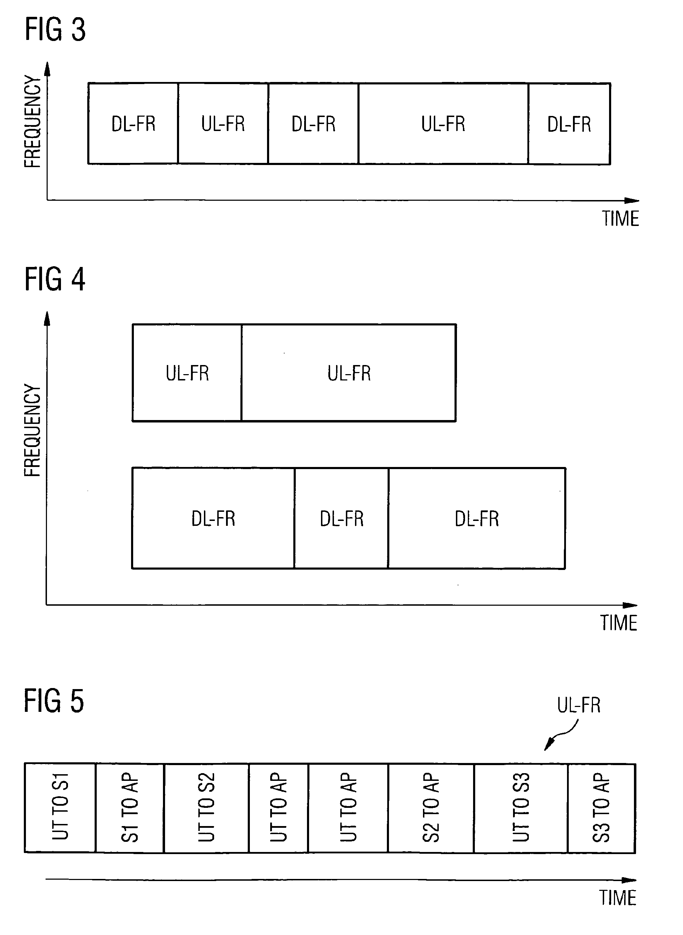

Figure 3 shows exemplarily the frame order of a TDD (Time Division Duplex) system, in which uplink time frames and downlink time frames alternate. This means that both the uplink time frames and the downlink time frames use the same frequency resources. For data processing purposes, a transmission gap between downlink frames and uplink frames may be introduced in the TDD mode, whereby during a transmission gap no transmission of messages takes place. Referring to figure 3, a transmission gap corresponds to a small distance in the time domain between neighbouring uplink and downlink time frames. Furthermore, transmission gaps can be used between the individual subframes of a TDD time frame. Referring to figure 2, a transmission gap corresponds to a small distance in the time domain between neighbouring subframes.

Figure 4 shows exemplarily the frame order of a FDD (Frequency Division Duplex) system, in which downlink and uplink transmissions take place on different frequencies. Therefore, in the frequency band of the downlink transmissions, each downlink time frame is followed by a downlink time frame; in the frequency band of the uplink transmissions, each uplink time frame is followed by an uplink time frame.

The downlink and uplink time frames each contain 2Q+R subframes, Q and R being positive integer values. Each subframe has a flexible duration, which means that a certain subframe can change its length from timeframe to timeframe. This allows for an efficient allocation of radio resources as will later on be explained in detail. The minimum duration of each subframe is zero.

Figure 2 illustrates time frames for Q=2 and R=1. The relay stations of a radio cell are divided in Q groups. The first group S1 of relay stations comprises the relay station RS1, the second group S2 of relay stations comprises the relay station RS2. In general, each group can contain one or more relay stations. Each user terminal UT1, UT2, UT3 is assigned to one of the relay stations RS1, RS2 or directly to the access point AP. According to the constellation of figure 1, the user terminal UT1 is assigned to the relay station RS1, the user terminal UT2 is assigned to the relay station RS2, and the user terminal UT3 is assigned to the access point AP.

The downlink time frame DL-FR of figure 2 contains:
- a first subframe AP TO S1 in which the radio resources are at the access points AP disposal for transmitting messages to the relay stations of the first group S1,
- a second subframe S1 TO UT in which the radio resources are at the disposal of the relay stations of the first group S1 for transmitting messages to user terminals,
- a third subframe AP TO UT in which the radio resources are at the disposal of access point AP for directly transmitting messages to user terminals,
- a fourth subframe AP TO S2 in which the radio resources are at the disposal of access point AP for transmitting messages to the relay stations of the second group S2,
- a fifth subframe S2 TO UT in which the radio resources are at disposal of the relay stations of the second group S2 for transmitting messages to user terminals.

Applying the downlink time frame structure of figure 2 to the constellation of figure 1 results in the access point AP being allowed to transmit messages to the relay station RS1 during the first subframe, the relay station RS1 being allowed to transmit messages to the user terminal UT1 during the second subframe, the access point AP being allowed to transmit messages to the user terminal UT3 during the third subframe, the access point AP being allowed to transmit messages to the relay station RS2 during the fourth subframe, and the relay station RS2 being allowed to transmit messages to the user terminal UT2 during the fifth subframe.

The uplink time frame UL-FR of figure 2 contains:
- a first subframe UT TO S1 in which the radio resources are at user terminals disposal for transmitting messages to the relay stations of the first group S1,
- a second subframe S1 TO AP in which the radio resources are at the disposal of the relay stations of the first group S1 for transmitting messages to the access point AP,
- a third subframe UT TO AP in which the radio resources are at the disposal of user terminals for directly transmitting messages to the access point AP,
- a fourth subframe UT TO S2 in which the radio resources are at the disposal of user terminals for transmitting messages to the relay stations of the second group S2,
- a fifth subframe S2 TO AP in which the radio resources are at disposal of the relay stations of the second group S2 for transmitting messages to the access point AP.

Applying the uplink time frame structure of figure 2 to the constellation of figure 1 results in the user terminal UT1 being allowed to transmit messages to the relay station RS1 during the first subframe, the relay station RS1 being allowed to transmit messages to the access point AP during the second subframe, the user terminal UT3 being allowed to transmit messages to the access point AP during the third subframe, the user terminal UT2 being allowed to transmit messages to the relay station RS2 during the fourth subframe, and the relay station RS2 being allowed to transmit messages to the access point AP during the fifth subframe.

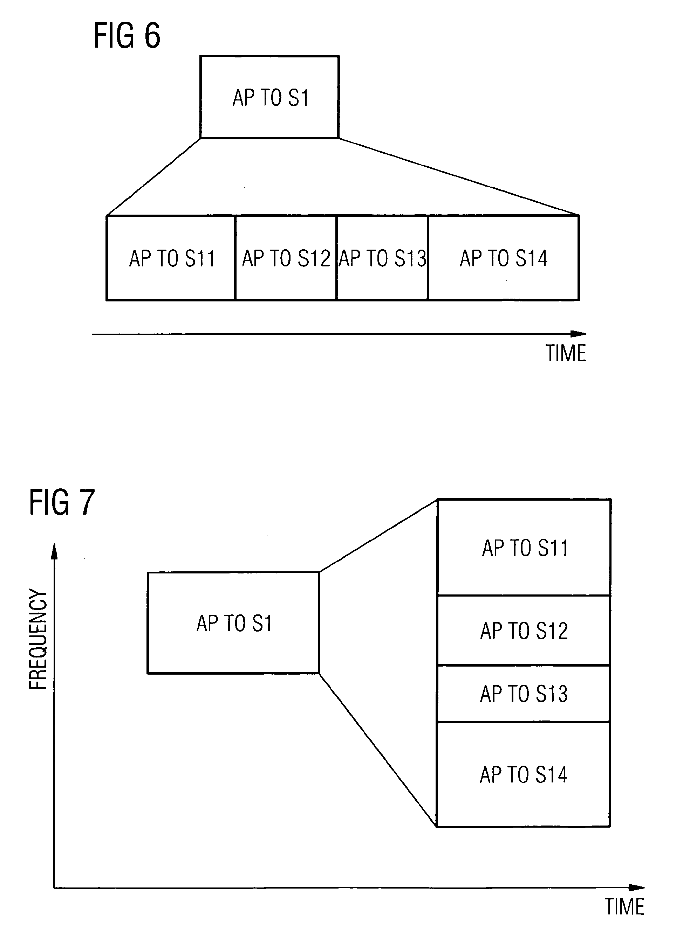

R subframes are used for the direct communication between the access point AP and user terminals. These R subframes are located in the middle of the time frame, therefore Q subframes are located in front of the R subframes, and Q subframes are located after the R subframes. In case Q is even-numbered, the subframes of every other group are located at the front end of the timeframe, i.e. before the R subframes, and the subframes of the other half of the groups are located at the back end of the timeframe, i.e. after the R subframes. If Q is odd-numbered, one group exists one subframe of which is located directly before the R subframes and one subframe of which is located directly after the R subframes. An example of such an uplink time frame structure for Q=3, R=2 is shown in figure 5. This uplink time frame UL-FR contains:
- a first subframe UT TO S1 in which the radio resources are at user terminals disposal for transmitting messages to the relay stations of the first group S1,
- a second subframe S1 TO AP in which the radio resources are at the disposal of the relay stations of the first group S1 for transmitting messages to the access point AP,
- a third subframe UT TO S2 in which the radio resources are at user terminals disposal for transmitting messages to the relay stations of the second group S2,
- a fourth and a fifth subframe UT TO AP in which the radio resources are at the disposal of user terminals for directly transmitting messages to the access point AP,
- a sixth subframe S2 TO AP in which the radio resources are at the disposal of the relay stations of the second group S2 for transmitting messages to the access point AP,
- a seventh subframe UT TO S3 in which the radio resources are at the disposal of user terminals for transmitting messages to the relay stations of a third group S3,
- an eighth subframe S3 TO AP in which the radio resources are at disposal of the relay stations of the third group S3 for transmitting messages to the access point AP.

As an OFDMA system is considered, within each subframe different connections are separated by using different OFDM-subcarriers. In addition, a CDMA and/or SDMA separation can be applied. Alternatively, not using OFDMA, CMDA or SDMA separation for different connections, it is possible to use all of the OFDM-subcarriers for each connection, separating different connections by blocks of time within the subframes.

Figure 6 shows - using the subframe AP TO S1 as example - the separation of different connections within the subframe AP TO S1 using TDMA. The access point AP transmits messages to a first relay station S11 of the group S1 in the first part of the subframe AP TO S1, to a second relay station S12 of the group S1 in the second part, to a third relay station S13 of the group S1 in the third part, and to a fourth relay station S14 of the group S1 in the fourth part.

Figure 7 shows - using the subframe AP TO S1 as example - the separation of different connections within the subframe AP TO S1 using FDMA. The access point AP transmits messages to a first relay station S11 of the group S1 in a first part of a frequency band, to a second relay station S12 of the group S1 in a second part of the frequency band, to a third relay station S13 of the group S1 in a third part of the frequency band, and to a fourth relay station S14 of the group S1 in a fourth part of the frequency band.

The duration of the subframes may vary over time. This can be due to the varying radio resource demands of user terminals, caused for instance by varying quality of service demands or changing demand for certain services. The order of the subframes within the time frames is fixed, so that the sequence of subframes within each downlink frame stays the same, and the sequence of subframes within each uplink frame stays the same. Preferably, the length of the time frames is fixed as well, so that the duration of every downlink frame is the same, and the duration of every uplink frame is the same. Alternatively, the length of the time frames can not be constant and therefore vary over time.

By having subframes of variable length, the resource allocation can be adapted e.g. to changes in the number of user terminals or in the radio channel conditions. If for instance the number of user terminals assigned to a relay station of a certain group increases while the number of user terminals assigned directly to the access point decreases, the efficient resource allocation algorithm reacts by decreasing the duration of the subframes used for the direct communication between the access point an the user terminals and by increasing the duration of the subframes used for the communication of the relay stations of the respective group.

Suppose the user terminal UT3 of figure 1 moves away from the access point AP towards the relay station RS1, so that the communication between the access point AP and the user terminal UT3 has to be effected via the relay station RS1. If a downlink communication between the access point AP and the user terminal UT3 is to take place, the downlink time frame DL-FR of figure 2 should be modified by decreasing the length of the subframe AP TO UT and by increasing the length of the subframes AP to S1 and S1 to UT. If an uplink communication between the access point AP and the user terminal UT3 is to take place, the uplink time frame UL-FR of figure 2 should be modified by decreasing the length of the subframe UT TO AP and by increasing the length of the subframes UT to S1 and S1 to AP.

If there is no information to transmit in a subframe, the length of this subframe can be reduced to zero. According to the above mentioned example, if the user terminal UT3 is removed from the area of direct radio coverage of the access point AP, the duration of the subframes AP to UT and UT to AP of figure 2 can be set to zero.

As explained above, the relay stations of a radio cell are pooled into Q groups. The groups can be formed by dividing the number of relay stations of the cell by the number of groups. Thus, the number of relay stations within each group can be equal. If for instance two groups are established and the number of relay stations within a cell is 2K, K being an integer, the first group can contain the relay stations with index 1 to K, and the second group can contain the relay stations having as index K+1 to 2K. In the case of an odd number of relay stations and two groups per cell, the number of relay station within one of the two groups exceeds the number of relay station within the other group by at least one.

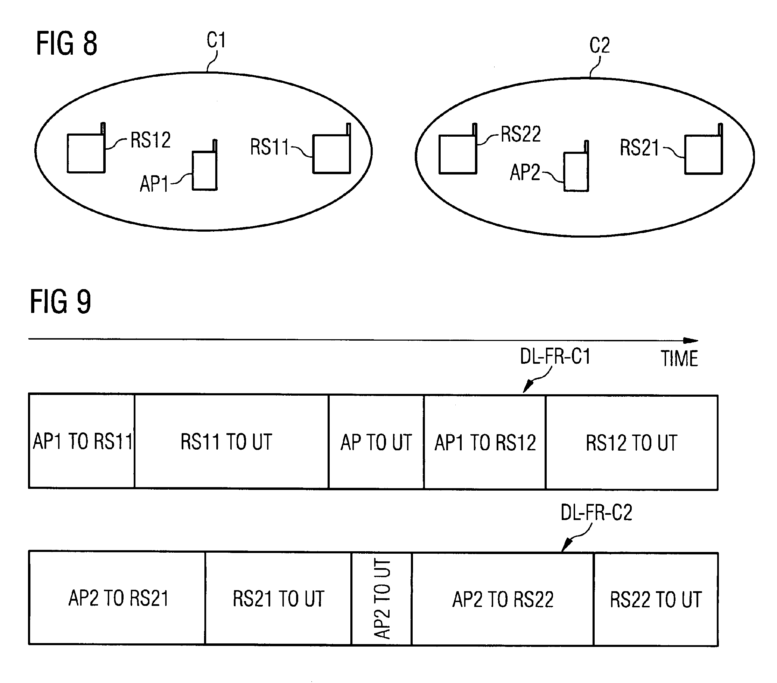

The assignment of relay stations to groups should take into account intercell-interferences, the intercell-interference being an effect which should be avoided. Figure 8 shows the radio cell C1 of the access point AP1 containing the relay stations RS11 and RS12, and the neighbouring radio cell C2 of the access point AP2 containing the relay stations RS21 and RS22. It is assumed that the radio cells C1 and C2 are synchronized, i.e. the time frames of the two radio cells C1 and C2 start and end at the same time. Both radio cells C1 and C2 use the time frame structures of figure 2 with Q=2 and R=1. In order to avoid interference, the first group S1 of the radio cell C1 contains the relay station RS11, while the first group S1 of the radio cell C2 contains the relay station RS21. Correspondingly, the second group S2 of the radio cell C1 contains the relay station RS12, while the second group S2 of the radio cell C2 contains the relay station RS22.

Figure 9 shows the downlink frame DL-FR-C1 of the radio cell C1 and the downlink frame DL-FR-C2 of the radio cell C2, both frame structures being based on the downlink frame structure of figure 2. Strong co-channel interference is expected if the subframes of the relay station RS11, i.e. AP1 to RS11 and RS11 to UT, overlap in time with the subframes of the relay station RS22, i.e. AP2 to RS22 and RS22 to UT. This is due to the fact that the relay station RS11 is close-by the relay station RS22. Because the relay station RS11 is assigned to the first group, the first group having its subframes at the beginning of the frame DL-FR-C1, and the relay station RS22 is assigned to the second group, the second group having its subframes at the end of the frame DL-FR-C2, interference between the communications of the relay stations RS11 and RS22 is avoided. Although because of the synchronisation between the cells C1 and C2, the time frames DL-FR-C1 and DL-FR-C2 have the same length, the lengths of the subframes of the time frame DL-FR-C1 can differ from the lengths of the subframes of the time frame DL-FR-C2. Therefore, an overlap of the subframes of the relay station RS11 and the subframes of the relay station RS22 is not completely excluded. However, the proposed frame structure in combination with the proposed assignment of relay stations to groups reduces drastically the probability of co-channel interference.

The described approach is not confined to two hop networks. A time frame suited for a three hop network for instance can be designed based on the structure of the two hop networks time frame. For the downlink direction, each subframe intended for the transmission of messages from relay stations to user terminals, i.e. for the second hop, can be split into a sub-subframe intended for the transmission of messages from relay stations to relay stations, i.e. for the second hop, and a sub-subframe intended for the transmission of messages from relay stations to user terminals, i.e. for the third hop. For the uplink direction, each subframe intended for the transmission of messages from relay stations to the access point, i.e. for the second hop, can be split into a sub-subframe intended for the transmission of messages from relay stations to relay stations, i.e. for the second hop, and a sub-subframe intended for the transmission of messages from relay stations to the access point, i.e. for the third hop. As a matter of course, alternatively to splitting the subframe of the second hop into sub-subframes for the second and for the third hop, the subframe of the first hop can be split. According to this principle, time frames for networks allowing for a greater number of hops than three can be built.

Although the invention has been elucidated in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for operating a radio communication system, wherein
- messages are transmitted from a sending radio station (AP, UT1) to a receiving radio station (AP, UT1) via a relay radio station (RS1),
- the transmission being carried out in time frames (DL-FR, UL-FR), the time frames (DL-FR, UL-FR)comprising subframes,
- first subframes (AP TO S1, UT TO S1) within the time frames (DL-FR, UL-FR) are provided for direct transmissions from the sending radio station (AP, UT1) to the relay radio station (RS1),
- second subframes (S1 TO UT, S1 TO AP) within the time frames (DL-FR, UL-FR) are provided for transmissions from the relay radio station (RS1) to the receiving radio station (AP, UT1),
**characterized in that**
- the duration of the first subframes (AP TO S1, UT TO S1) and/or of the second subframes (S1 TO UT, S1 TO AP) varies.

2. Method according to claim 1, wherein
the variation is due to a change of a radio resource demand and/or of radio channel conditions.

3. Method according to claim 1 or 2, wherein
- third subframes (AP TO S2) within the time frames (DL-FR) are provided for direct transmissions from the sending radio station (AP) to a second relay radio station (RS2),
- fourth subframes (S2 TO UT) within the time (DL-FR) frames are provided for transmissions from the second relay radio station (RS2) to a second receiving radio station (UT2),
- the duration of the third subframes (AP TO S2) and/or of the fourth subframes (S2 TO UT) varies.

4. Method according to claim 3, wherein
- the first subframes (AP TO S1) are provided for direct transmissions from the sending radio station (AP) to a first group of relay radio stations, the first group comprising the relay radio station (RS1),
- the third subframes (AP TO S2) are provided for direct transmissions from the sending radio station (AP) to a second group of relay radio stations, the second group comprising the second relay radio station (RS2).

5. Method according to any one of the previous claims 1 to 4, wherein
- fifth subframes (AP TO UT) within the time frames (DL-FR) are provided for direct transmissions from the sending radio station (AP) to a third receiving radio station (UT3),
- the duration of the fifth subframes (AP TO UT) varies.

6. Method according to the claims 1 and 3 and 5, wherein the order of subframes within the time frames (DL-FR) is: first subframe (AP TO S1), second subframe (S1 TO UT), fifth subframe (AP TO UT), third subframe (AP TO S2), fourth subframe (S2 TO UT).

7. Method according to any one of the previous claims 1 to 6, wherein
- the messages are transmitted from the relay radio station (RS1) to the receiving radio station (UT1) via an other relay radio station,
- sixth subframes within the second subframes (S1 TO UT) are provided for direct transmissions from the relay radio station (RS1) to the other relay radio station,
- seventh subframes within the second subframes (S1 TO UT) are provided for transmissions from the other relay radio station to the receiving radio station (UT1),
- the duration of the sixth subframes and/or of the seventh subframes varies.

8. Method according to claim 1, wherein
- third subframes (UT TO S2) within the time frames (UL-FR) are provided for direct transmissions from a second sending radio station (UT2) to a second relay radio station (RS2),
- fourth subframes (S2 TO AP) within the time frames (UL-FR) are provided for transmissions from the second relay radio station (RS2) to the receiving radio station (AP),
- the duration of the third subframes (UT TO S2) and/or of the fourth subframes (S2 TO AP) varies.

9. Method according to claim 8, wherein
- fifth subframes (UT TO AP) within the time frames (UL-FR) are provided for direct transmissions from a third sending radio station (UT3) to the receiving radio station (AP),
- the duration of the fifth subframes (UT TO AP) varies.

10. Method according to claim 8 or 9, wherein
the order of subframes within the time frames (UL-FR) is: first subframe (UT TO S1), second subframe (S1 TO AP), fifth subframe (UT TO AP), third subframe (UT TO S2), fourth subframe (S2 TO AP).

11. Method according to any one of the previous claims 8 to 10, wherein
- the messages are transmitted from the relay radio station (RS1) to the receiving radio station (AP) via an other relay radio station,
- sixth subframes within the second subframes (S1 TO AP) are provided for direct transmissions from the relay radio station (RS1) to the other relay radio station,
- seventh subframes within the second subframes (S1 TO AP) are provided for transmissions from the other relay radio station to the receiving radio station (AP),
- the duration of the sixth subframes and/or of the seventh subframes varies.

12. Method according to any one of the previous claims 1 to 11, wherein
- the method is carried out in a first radio cell (C1) by radio stations (RS12, RS11, AP) of the first radio cell (C1),
- the method is carried out in a second radio cell (C2) by radio stations (RS22, RS21, AP) of the second radio cell (C2),
- the order of the subframes within the time frames (DL-FR, UL-FR) of the first radio cell (C1) is adapted to the order of the subframes within the time frames (DL-FR, UL-FR) of the second radio cell (C2).

13. Method according to any one of the previous claims 1 to 12, wherein
the duration of the time frames (DL-FR, UL-FR) is fixed.

14. Method according to any one of the previous claims 1 to 12, wherein
the duration of the time frames (DL-FR, UL-FR) varies.

15. Method according to any one of the previous claims 1 to 14, wherein
within the subframes messages of different connections are separated using time and/or frequency and/or space and/or code.

16. Radio communication system comprising
- means for transmitting messages from a sending radio station (AP, UT1) to a receiving radio station (AP, UT1) via a relay radio station (RS1), the transmission being carried out in time frames (DL-FR, UL-FR), the time frames (DL-FR, UL-FR) comprising subframes,
- means for providing first subframes (AP TO S1, UT TO S1) within the time frames (DL-FR, UL-FR) for direct transmissions from the sending radio station (AP, UT1) to the relay radio station (RS1),
- means for providing second subframes (S1 TO UT, S1 TO AP) within the time frames (DL-FR, UL-FR) for transmissions from the relay radio station (RS1) to the receiving radio station (AP, UT1),
**characterised in**
- means for varying the duration of the first subframes (AP TO S1, UT TO S1) and/or of the second subframes (S1 TO UT, S1 TO AP).
